(19) Europäisches Patentamt
European Patent Office
Office européen des brevets

(11) Publication number: **0 267 868 B1**

(12) **EUROPEAN PATENT SPECIFICATION**

(45) Date of publication of patent specification: **05.08.92**

(51) Int. Cl.$^5$: **C09J 5/02**, C08J 5/12

(21) Application number: **87630235.7**

(22) Date of filing: **11.11.87**

# (54) Pretreatment process for amorphous hydrated metal oxide primer for organic adhesively bonded joints.

(30) Priority: **12.11.86 US 929532**

(43) Date of publication of application:
**18.05.88 Bulletin 88/20**

(45) Publication of the grant of the patent:
**05.08.92 Bulletin 92/32**

(84) Designated Contracting States:
**DE FR GB IT**

(56) References cited:
**FR-A- 2 220 705**
**GB-A- 1 288 536**

**CHEMICAL ABSTRACTS, vol. 79, no. 18, 5th November 1973, page 29, abstract no. 105955z, Columbus, Ohio, US; & JP-A-73 43 771 (TORAY INDUSTRIES INC.) 23-06-1973**

(73) Proprietor: **UNITED TECHNOLOGIES CORPORATION**
**United Technologies Building 1, Financial Plaza**
**Hartford, CT 06101(US)**

(72) Inventor: **Lamm, Foster P.**
**56 Clinton Drive**
**South Windsor Connecticut 06074(US)**
Inventor: **Pike, Roscoe A.**
**55 Windmill Drive**
**Granby Connecticut 06035(US)**

(74) Representative: **Schmitz, Jean-Marie et al**
**OFFICE DENNEMEYER S.à.r.l. P.O. Box 1502**
**L-1015 Luxembourg(LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention concerns a method of bonding a plurality of articles together at least one of which is a metal by placing a polymeric adhesive in contact with and between the articles and applying pressure, and optionally heat to said articles.

The field of art to which this invention pertains is methods for adhesively bonding joints.

Weight saving and manufacturing cost benefits have led to the increase in use of adhesively bonded structures in the aircraft and aerospace industries. In order to be a viable alternative to, for example, metal fasteners, these adhesive bonds should maintain the strength typical of conventional fastener systems. In many applications the bonds are put under a variety of environmental and mechanical stresses. For example, frequently these bonds are exposed over long periods of time to wet environments which can result in a loss of bond strength. The loss of strength can result from the extension of cracks and other deformations that occur in the adhesive and which are exacerbated by the moist environment. As a result of this deficiency, extensive research and development efforts have been undertaken to define methods and identify materials which improve bonded joint performance in humid conditions. For example, it is known that surface preparation is important in the bonding of aluminum and titanium. Thus it is essential that before bonding, the adherend is cleaned and chemically pretreated to produce a surface which combines with the adhesive to develop the bond strengths which meet application requirements. A variety of pretreatments for aluminum have been developed to produce improved bondability. These include acid etching at 70 °C for approximately 15 minutes (FPL), and anodized treatments with sulfuric (SA), chromic (CAA), Pasa-Jell™ treatment (Products Research and Chemical Corp, Glendale, California) and phosphoric acid (PAA). These pretreatments typically utilize corrosive conditions, anodization equipment or environmentally hazardous chemicals, such as chromium and as such may be harmful or complicated, particularly in field applications. The latter, PAA, is generally accepted as the most effective surface treatment in terms of bond strength and durability at the present time. It has been shown by in depth surface analysis using scanning transmission electron microscopy that the PAA treatment produces fine oxide protrusions of greater length and magnitude than other surface treatments. These whiskers are believed to account for the strength enhancement achieved with joints made using PAA treated adherends. Thus, mechanical interlocking by whisker reinforcement of an adhesive appear to play a role in enhancing adhesive bonding. The probability that chemical interaction is of major importance, depending upon the polymer/metal combination, is also believed. Although the above surface preparations have provided advantages, there is a need for new technology to aid in the advancement of lightweight aerospace-type metal structures.

The FR-A-2 220 705 describes a process for improving the strength of a bond between adherent articles comprising applying an adhesive on one mating surface of at least one article wherein before joining the surfaces together one of the mating surfaces is treated with a stable aqueous colloidal solution comprising insoluble hydrated oxide particles.

The GB-A-1 288 536 describes a method of improving the adhesion between a first coating layer which contains unreacted epoxy and/or hydroxyl groups and a covering composition which contains unreacted epoxy and/or hydroxyl groups and which forms a second coating the method comprising contacting the first coating layer with a priming composition comprising, incorporated in a solvent capable of penetrating the first coating layer, a titanium or aluminium alkoxide.

Accordingly, there is a constant search in this field of art for new methods of providing lightweight, structurally sound, adhesively bonded metal joints.

The method of bonding together a plurality of articles according to the present invention comprises:

a) exposing a surface of at least one of the metal articles, prior to placing adhesive on the surface, to a corrosive environment at a temperature less than 50 °C in order to pretreat said surface;

b) applying to said pretreated surface prior to placing adhesive on the surface a layer comprising $M_x$-$(OR)_y$ wherein

(i) x is 1;

(ii) y is 3 or 4;

(iii) M is selected from the group consisting of titanium, zirconium, silicon, aluminum, nickel and iron; and

(iv) R is an organic alkane radical from $C_1$ to $C_{10}$; and

c) exposing the metal article having the $M_x(OR)_y$ layer thereon to moisture and a temperature of 25 °C to 125 °C prior to contact with the adhesive;

resulting in a joint resistant to crack propagation.

According to this invention the method of bonding articles together utilizes a short term corrosive

pretreatment prior to application of an amorphous hydrated metal oxide primer and an adhesive resulting in a joint resistant to crack propagation. The method comprises bonding a plurality of articles together, at least one of which is metal. The surface of the metal article is exposed to a corrosive environment at a temperature less than 50° C. Then a layer comprising $M_x(OR)_y$ wherein x is 1, y is 3 or 4, M is any metal selected from the group consisting of titanium, zirconium, silicon, aluminium, nickel and iron capable of forming a stable alkoxide and R is an organic alkane radical from $C_1$ to $C_{10}$ is applied to the pretreated surface. Then the coated metal article is exposed to moisture and a temperature of 25° C to 125° C. The metal article is bonded to another article with a polymeric adhesive.

These pretreatments for metal surfaces when used in combination with amorphous metal oxide primer for adhesively bonded joints reduce the need for more technically complicated and environmentally hazardous pretreatments while providing bonds that are resistant to crack propagation. Such systems are particularly attractive for field repair situations. Thus, this invention makes a significant advancement in the aerospace industry by providing new technology relating to adhesive bonding.

Other features and advantages will be apparent from the specification and claims and from the accompanying drawings which illustrate an embodiment of the invention.

Fig. 1 illustrates crack propagation for amorphous hydrated metal oxide primed aluminum which was surface treated with an FPL etch at 25° C for five minutes using varying thicknesses of the above primer.

Fig. 2 illustrates the difference in crack propagation between bonded joints made with an organic primer vs. the amorphous hydrated metal oxide primer using a 5 minute room temperature FPL surface treatment for 2024 aluminum adherends.

Fig. 3 illustrates the difference in crack propagation between bonded joints made with an organic primer vs. the amorphous hydrated metal oxide primer using a 5 minute room temperature FPL treatment for 6061 aluminum adherends.

Fig. 4 illustrates the difference in crack propagation between bonded joints made with an organic primer vs. the amorphous hydrated metal oxide primer using a 10 minute room temperature Pasa-Jell 101 surface treatment for 2024 aluminum adherends and two epoxy film adhesives.

Fig. 5 illustrates the difference in crack propagation between bonded joints made with an organic primer vs. the amorphous hydrated metal oxide primer using a 10 minute Pasa-Jell 107 surface treatment for titanium.

According to the present invention the metal article surface is pretreated by exposure to a corrosive environment sufficient to clean the surface (e.g. oxidize the surface removing any old scale and forming a fresh oxide surface on the metal). Thus, the pretreatment should be such that when the amorphous hydrated metal oxide primer is applied, the metal article is bonded through an organic adhesive to another article resulting in a joint that has resistance to crack formation and propagation (e.g., debond resistance). The corrosive environment can either be an aqueous solution, or gel (e.g., thick paste). The corrosive composition can be either acidic or basic. However, it is preferred it is an oxidizing acid system because this provides more rapid cleaning of the metal surface. An exemplary list of suitable generic corrosives would include nitric acid, phosphoric acid, chromic acid, sulfuric acid hydrochloric acid and various combinations. In addition, known additives which act as accelerators, buffers and the like may be included. The exposure can be at room temperatures (e.g. 25° C) or it can be at elevated temperatures (e.g. up to 50° C). It should not be above 50° C because of difficulty in controlling the amount of surface reaction. It is preferred that the temperature is below about 50° C as at this moderate temperature, the corrosive chemicals are easier to work with, less dangerous, and less apt to damage the articles to be bonded. It is especially preferred that the temperature is 25° C to 30° C, particularly for field applications where there is typically less control over processes and conditions. Yet surprisingly at these low temperatures, an effective pretreatment is obtained.

The exposure time can be a minimum of 5 minutes to 15 minutes and up to 20 minutes at room temperature. Longer time periods have not been found to improve the bond and may only aggrevate the problems identified above. Particularly in field applications a simple procedure is always desirable. The time exposure varies as a function of temperature since this pretreatment is believed to be a chemical reaction. Thus, with higher temperatures (e.g., up to 45-50° C) the time period can even be less than 5 minutes (e.g., 2 minutes). Finally, depending on the metal article, corrosive composition (e.g. pH, chemical type), the time period will vary as a function of temperature. It is believed that the time and temperature conditions are less than those of conventional pretreatments that are not followed by application of the amorphous hydrated metal oxide. It is believed this is because the article surfaces are only being stripped (e.g., deoxidized) instead of resulting in growth of thick new oxide coatings as with conventional processes.

Once the metal article is pretreated, any method of bonding may be used for the practice of this invention that provides an amorphous, hydrated metal oxide coated metal article bonded to another article

with an adhesive as described in US-A-4 623 591 and below. If a plurality of metal articles are to be bonded, it is preferred to prime each metal article. It is also preferred to apply a layer of metal alkoxide (described below) to the metal article(s) by a solvent casting, dipping or spraying procedure. The metal alkoxide coated metal articles are then maintained at a temperature of 25° C to 300° C in the presence of moisture. Below 25° C, the reaction kinetics are typically too slow and above 300° C loss of desirable metal properties or crystallization of the oxide surface may occur with an accompanying loss of mechanical strength. It is especially preferred to heat the metal alkoxide coated articles to a temperature of 25° C to 125° C as the lower temperatures minimize the risk of mechanical property degradation of, for example, aluminum substrates, such as with aluminum spars which have been shot peened to induce compressive surface stresses. The application of the inorganic primer for field repair situations is also possible with the use of the lower conversion temperature.

Any metal alkoxide that hydrolizes to give an amorphous hydrated metal oxide (i.e. a monohydroxy metal oxide) may be used in the practice of this invention. Metal alkoxides having the formula $M_x(OR)_y$ where x is 1 and y is 3 or 4 are preferred in forming the metal oxide primer of this disclosure, y being determined by the particular valence of the metal. y should not be 2 as typically a valence of at least 3 is necessary to form a monohydroxy metal oxide. M is any metal capable of forming a stable alkoxide, which can be purified by, for example, distillation or crystallization without decomposition; as y is defined above essentially all metals meet this requirement. According to the present invention the metal is selected from the group consisting of titanium, zirconium, silicon, iron, nickel and aluminum. Typically, R can be any organic radical that can be distilled at temperatures below 300° C. Since the alkoxide ((OR) moiety) is not incorporated into the primer, the important criteria associated with it is that the resultant alcohol can be volatilized at temperatures that are not high enough to damage the primer or substrate. According to the present invention R is an alkane radical from $C_1$ to $C_{10}$. It is especially preferred that R is methyl, ethyl, propyl or sec-butyl as these radicals are volatilized as alcohols at relatively low temperatures. In addition, the alkoxides can be modified by incorporation of varying amounts of additives such as phosphate, silicate or magnesium oxide without adversely affecting the primer properties. Mixtures of the above metal alkoxides may be used in the practice of this invention.

The above metal alkoxides hydrolize to amorphous hydrated metal oxides (primer) when exposed to moisture such as atmospheric moisture or moisture on the metal substrate surface and optionally heat as described below. An exemplary reaction believed to occur is that of aluminum alkoxide to alumina. The initial hydrolysation reaction of aluminum alkoxides is empirically illustrated as

$Al(OR)_3 + H_2O \rightarrow Al(OR)_2(OH) + R(OH)$ (1)

This reaction proceeds rapidly with further hydrolysation-polymerisation to

$$2Al(OR)_2(OH) + H_2O \rightarrow RO\text{-}\underset{}{\overset{OH}{\overset{|}{Al}}}\text{-}O\text{-}\overset{OH}{\overset{|}{Al}}\text{-}OR + 2\ ROH,\ etc. \quad (2)$$

to incorporate n aluminum ions, i.e. $Al_nO_{n-1}(OH)_{(n+2)-x}(OR)_x$ assuming linear polymerisation for simplicity. As the reaction proceeds the number of OR groups, i.e. x, relative to n decreases to a value depending on the hydrolysis temperature and available moisture concentration. Under normal application conditions, the ratio of residual OR groups as designated by x is less than 4 and n is 28 or greater. Such low levels of OR do not impede the performance of the primer. In contrast, zirconium alkoxide is believed to hydrolize to a hydrated oxide, i.e. $ZrO_2 . 1.7\ H_2O$ having no residual -OR or OH groups.

The thickness of this primer layer can vary effectively from 0.15µm (microns (µ)) to 10µm (microns). Preferably the thickness is 0.3µm (microns) to 1.0µm (microns). Above 10µm (microns) the layer can be so thick as to create stress risers and to form a weak boundary layer. Below about 0.15µm (microns) the layer does not provide the properties such as crack propagation resistance at the levels typically required. In addition, it is preferable to apply the primer to the metal surface with a plurality of layers of metal alkoxide as this facilitates removal of volatiles and solvent which can be more difficult to achieve from a single thick application.

The articles of this invention comprise metals or alloys thereof capable of having an oxide scale exhibiting sufficient strength to prevent it from being debonded from the substrate, i.e. an adherent scale. The adherent oxide surface may be naturally occurring such as with alumina ($Al_2O_3$) or it may require a

special pretreatment to produce a man-made adherent oxide, such as the case with gold, where the naturally occurring oxide is nonadherent or does not form. Preferably, the metal article is selected from the group consisting of aluminum, titanium, nickel, iron, copper or their alloys. By alloy is meant the article having the major metal present in greater than a 50 percent by weight (%) amount. In addition, a primed metal article can be bonded to a conventional fiber reinforced polymeric matrix composite such as an epoxy, polyimide, polyester, acrylic, urethane, cellulosic, rubber or phenolic based composite. Examples of fibers include glass, alumina, silicon carbide, graphite, amides and Kevlar™ fiber (DuPont DeNemours, E.I., Co., Wilmington, Delaware).

Any of the above described metal alkoxides or mixtures thereof can be used to prime any of the above described metal articles, the composition of the mixture having little effect except that it is preferred to prime the articles with an alkoxide which comprises in part an aluminum alkoxide. Thus, for example, properties such as crack propagation are enhanced when an aluminum alkoxide is applied to aluminum or titanium articles.

Any conventional adhesive can be used for the practice of this invention that is useful for bonding articles, particularly metal articles. For example, epoxide, polyimide, acrylic or urethane adhesives are used as these provide the properties most desired such as good strength. It is especially preferred to use epoxy, urethane or polyimide adhesives as they resist environmental stresses, are strong and are frequently chosen for aerospace applications.

Example 1

2024 aluminum alloy adherends were treated with a standard FPL acid solution by immersion in the acid solution for 5 minutes at room temperature. E-8385 aluminum alkoxide available from Stauffer Chemical Company, Fairfield, Connecticut was diluted to 1% with toluene and applied to the treated aluminum adherends by solvent casting (brushed on). One to six coatings of the primer was applied. The aluminum alkoxide was converted to amorphous aluminum by solvent evaporation at room temperature after which a supported film of EA-9649 epoxy adhesive available from Hysol (Pittsburg, California) was applied to the amorphous aluminum coated aluminum adherends. A stop was placed between aluminum articles to insure a bond line thickness of about 0.127 millimeters (mm) and 0.172 MPa (1.757 kilogram per square centimeter ($kg/cm^2$)) pressure was applied at 177 °C for 120 minutes. Wedge crack tests were carried out per ASTM D-3762 and the results are detailed following the next example as part of Figure 1.

Example 2

2024 aluminum adherends, as prepared in Example 1, were treated with a commercial organic primer, BR-127™ epoxy available from American Cyanamid (Stamford, Connecticut) by spray application followed by curing at 121 °C. A separate set of adherends was coated with four coats of a 1% toluene solution of E-8385 aluminum alkoxide and allowed to dry 20 minutes at room temperature. After coating, both sets of adherends were bonded using a supported film adhesive EA-9649™ epoxy as described in Example 1. The wedge crack test results are illustrated in Figure 2.

Example 3

6061 aluminum adherends, as prepared in Example 1 were primed with an organic and inorganic primer as described in Example 2, and bonded using a supported film adhesive FM-300 epoxy available from American Cyanamid (Stamford, Connecticut). The wedge crack test results are illustrated in Figure 3.

Example 4

2024 aluminum alloy adherends were treated at room temperature for 10 minutes with Pasa-Jell 101 available from Semco Division of Products Research and Chemical Corporation, Glendale, California. One set of adherends were primed with a commercial organic primer, BR-127™ epoxy and a separate set with four coats of an E-8385 aluminum alkoxide primer. After priming, both sets of adherends were bonded using a supported film FM-300 adhesive and EA-9649 adhesive. The wedge crack test results are illustrated in Figure 4.

Example 5

Titanium 6-4 alloy adherends were solvent cleaned and treated for 10 minutes with Pasa-Jell 107 acid. After treatment, one set of adherends was primed with BR-161 organic primer available from American Cyanamid (Stamford, Connecticut), and another set with an aluminum alkoxide E-8385 primer available from Stauffer Chemical Company. The two sets of primed adherends were bonded using an FM-330S supported film adhesive available from American Cyanamid. The wedge crack test results are illustrated in Figure 5.

These adhesively bonded aluminum joints are particularly resistant to crack propagation. A clear understanding of this may be had by reference to the Figures. Figures 1 through 5 detail data about various wedge crack tests in which wedge crack test ASTM D3762, described above, was used.

In Fig. 1 crack propagation in mm Y is illustrated as a function of time (hours) X at 71°C and 100% relative humidity (R.H.). The graphs illustrate the crack propagation for increasing number of coatings using amorphous hydrated aluminum oxide compositions.

Fig. 2 illustrates crack propagation in mm Y as a function of time (hours) X at 71°C and 100% R.H. The amorphous hydrated aluminum oxide primed joint (A) shows a great improvement over a typical organic resin primed aluminum joint such as the BR-127™ epoxy primer (B).

Fig. 3 illustrates crack propagation in mm Y as a function of time (hours) X at 71°C and 100% R.H. There is a large improvement for the amorphous hydrated aluminum oxide primer (A) over the typical BR-127 epoxy primer (B).

Fig. 4 illustrates another wedge crack test in which crack propagation in mm Y is given as a function of time (hours) X at 71°C and 100% R.H. There is a large increase in crack propagation resistance for the amorphous hydrated aluminum oxide primer (A) + (B) over the control (C) which utilized a BR-127 epoxy resin primer.

Fig. 5 illustrates a wedge crack test by plotting crack propagation mm Y against time (hours) X at 71°C and 100% R.H. After 80 hours, there is a marked decrease in crack propagation for the amorphous hydrated aluminum oxide primer (A) over the control which used an BR-161 primer (B).

These room temperature short-time pretreatments and inorganic primer may be used to advantage in bonding metal to metal or metal to composites. In addition, it may be applied to articles to aid in adhesion of coatings such as with plastic packaged microelectronic devices, wire coatings, honeycomb construction. While this invention has been described in terms of a metal alkoxide a mixture of various metal alkoxides can be used.

The pretreatment process enables preparation of the surface with a minimum of corrosive chemicals, time, and environmentally hazardous chemicals, such as chromium. The fact that the pretreatment when used in conjunction with the primer coat does not have to be as extensive is surprising. Thus, this is a simple procedure in contrast to the generally accepted PAA treatment, yet in conjunction with the amorphous hydrated metal oxide, it provides improved joint resistance to crack propagation.

The primer coating provides improved crack propagation resistance in moist environments. The resulting properties such as tensile and T-peel strengths of bonded joints made with the inorganic primer are at least equivalent to bonded joints made using conventional organic primers. Yet the inorganic primers can be utilized as thinner coatings than the 5µm (microns) to 10 layers typical of organic primers. Thicker layers tend to set up stress rises (i.e. weak boundary layer) as the components segregate. Also, because of its thermal stability the inorganic primer can be used equally as well with high temperature adhesives such as polyimides or with low temperature adhesives such as epoxy systems unlike organic primers which are typically temperature specific. Another major advantage of the inorganic primer is that it can be used on metal surfaces which have been treated by a variety of surface treatments and provide the same high level of crack propagation resistance. In contrast, organic primers produce different results dependent upon the surface pretreatments employed. In addition, conventional organic primers use strontium chromates as corrosion inhibitors and these cause toxicity problems in their manufacture and use. This invention provides an amorphous hydrated metal oxide primer for adhesively bonded joints that results in greatly increased crack propagation resistance. Thus, it makes a significant advance in the aerospace industry by providing new technology relating to adhesively bonded joints.

Together, the pretreatment process and amorphous hydrated metal oxide primer provide a simple, environmentally sound, method of adhesively bonding articles. Thus they make a significant advance in the aerospace industry by providing new technology relating to adhesively bonded joints.

It should be understood that the invention is not limited to the particular embodiments shown and described herein, but that various changes and modifications may be made without departing from the scope of this novel concept as defined by the following claims.

**Claims**

**1.** A method of bonding a plurality of articles together at least one of which is metal by placing a polymeric adhesive in contact with and between the articles and applying pressure, and optionally heat, to said articles wherein the improvement comprises:

a) exposing a surface of at least one of the metal articles, prior to placing adhesive on the surface, to a corrosive environment at a temperature less than 50°C in order to pretreat said surface;

b) applying to said pretreated surface prior to placing adhesive on the surface a layer comprising $M_x(OR)_y$ wherein

(i) x is 1;

(ii) y is 3 or 4;

(iii) M is selected from the group consisting of titanium, zirconium, silicon, aluminum, nickel and iron; and

(iv) R is an organic alkane radical from $C_1$ to $C_{10}$; and

c) exposing the metal article having the $M_x(OR)_y$ layer thereon to moisture and a temperature of 25°C to 125°C prior to contact with the adhesive;

resulting in a joint resistant to crack propagation.

**2.** The method of bonding as recited in claim 1 wherein the metal article is selected from the group consisting of aluminum, titanium, steel, magnesium, iron, nickel and their alloys.

**3.** The method of bonding as recited in claim 1 wherein at least one of the articles is a fiber reinforced polymeric composite.

**4.** The method of bonding as recited in claim 1 wherein M is selected from the group consisting of titanium and aluminum.

**5.** The method of bonding as recited in claim 1 wherein said metal article surface is exposed to an oxidizing acid.

**6.** The method of bonding as recited in claim 1 wherein said metal article surface is exposed to a corrosive environment for less than 15 minutes at 20°C to 35°C temperature.

**Revendications**

**1.** Procédé pour le collage mutuel de plusieurs articles dont au moins un est un métal, en plaçant un adhésif polymère en contact avec et entre les articles et en appliquant de la pression et éventuellement de la chaleur auxdits articles, dans lequel le perfectionnement consiste à :

a) exposer une surface d'au moins un des articles métalliques avant de placer un adhésif sur la surface, à un environnement corrosif à une température inférieure à 50°C afin de soumettre ladite surface à un prétraitement;

b) appliquer à ladite surface prétraitée, avant de placer l'adhésif sur la surface, une couche comprenant $M_x(OR)_y$ où

(i) x est égal à 1;

(ii) y est égal à 3 ou 4;

(iii) M est choisi parmi le groupe comprenant le titane, le zirconium, le silicium, l'aluminium, le nickel et le fer; et

(iv) R est un radical d'alcane organique en $C_1$-$C_{10}$; et

c) exposer l'article métallique sur lequel est disposée la couche $M_x(OR)_y$, à l'humidité et à une température de 25°C à 125°C avant de le mettre en contact avec l'adhésif;

ce qui donne lieu à un joint résistant à la propagation de fissures.

**2.** Procédé de collage selon la revendication 1, dans lequel on choisit l'article métallique parmi le groupe comprenant l'aluminium, le titane, l'acier, le magnésium, le fer, le nickel et leurs alliages.

**3.** Procédé de collage selon la revendication 1, dans lequel au moins un des articles est un composite polymère renforcé par des fibres.

**4.** Procédé de collage selon la revendication 1, dans lequel M est choisi parmi le groupe comprenant le titane et l'aluminium.

**5.** Procédé de collage selon la revendication 1, dans lequel on expose ladite surface de l'article métallique à un acide à action oxydante.

**6.** Procédé de collage selon la revendication 1, dans lequel on expose ladite surface de l'article métallique à un environnement corrosif pendant moins de 15 minutes à une température de 20 °C à 35 °C.

**Patentansprüche**

**1.** Verfahren zum Miteinanderverbinden von mehreren Gegenständen, von denen wenigstens einer metallisch ist, durch Bringen eines polymeren Klebstoffes in Kontakt mit den Gegenständen und zwischen die Gegenstände und Ausüben von Druck, und wahlweise von Wärme, auf die Gegenstände, wobei die Verbesserung beinhaltet:

a) Beaufschlagen einer Oberfläche wenigstens eines der Metallgegenstände, bevor Klebstoff auf die Oberfläche aufgetragen wird, mit einer korrodierenden Umgebung bei einer Temperatur von weniger als 50 °C, um diese Oberfläche vorzubehandeln;

b) Auftragen auf die vorbehandelte Oberfläche, bevor Klebstoff auf die Oberfläche aufgebracht wird, einer Schicht, die $M_x(OR)_y$ aufweist, wobei

(i) x gleich 1 ist;

(ii) y gleich 3 oder 4 ist;

(iii) M aus der Gruppe ausgewählt wird, die aus Titan, Zirkonium, Silicium, Aluminium, Nickel und Eisen besteht; und

(iv) R ein organisches Alkanradikal von $C_1$ bis $C_{10}$ ist; und

c) Beaufschlagen des Metallgegenstands, der die $M_x(OR)_y$-Schicht trägt, mit Feuchtigkeit und einer Temperatur von 25 °C bis 125 °C vor dem Kontakt mit dem Klebstoff;

was eine Verbindungsstelle ergibt, die gegen Rißausbreitung beständig ist.

**2.** Verbindungsverfahren nach Anspruch 1, wobei der Metallgegenstand aus der Gruppe ausgewählt wird, die aus Aluminium, Titan, Stahl, Magnesium, Eisen, Nickel und deren Legierungen besteht.

**3.** Verbindungsverfahren nach Anspruch 1, wobei wenigstens einer der Gegenstände ein faserverstärkter polymerer Verbundstoff ist.

**4.** Verbindungsverfahren nach Anspruch 1, wobei M aus der Gruppe ausgewählt wird, die aus Titan und Aluminium besteht.

**5.** Verbindungsverfahren nach Anspruch 1, wobei die Metallgegenstandsoberfläche mit einer oxidierenden Säure beaufschlagt wird.

**6.** Verbindungsverfahren nach Anspruch 1, wobei die Metallgegenstandsoberfläche mit einer korrodierenden Umgebung für weniger als 15 Minuten bei einer Temperatur von 20 °C bis 35 °C beaufschlagt wird.

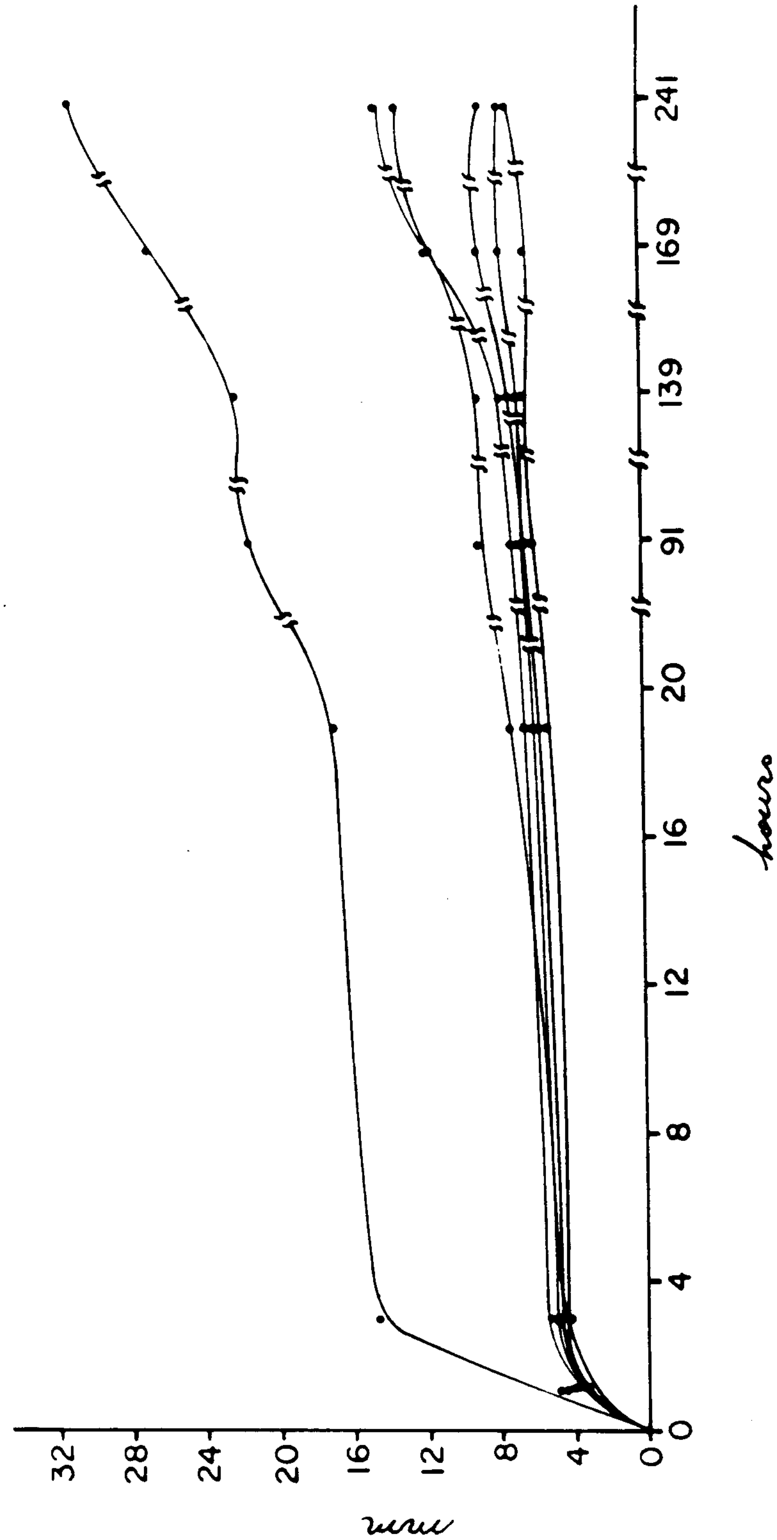


FIG. 1

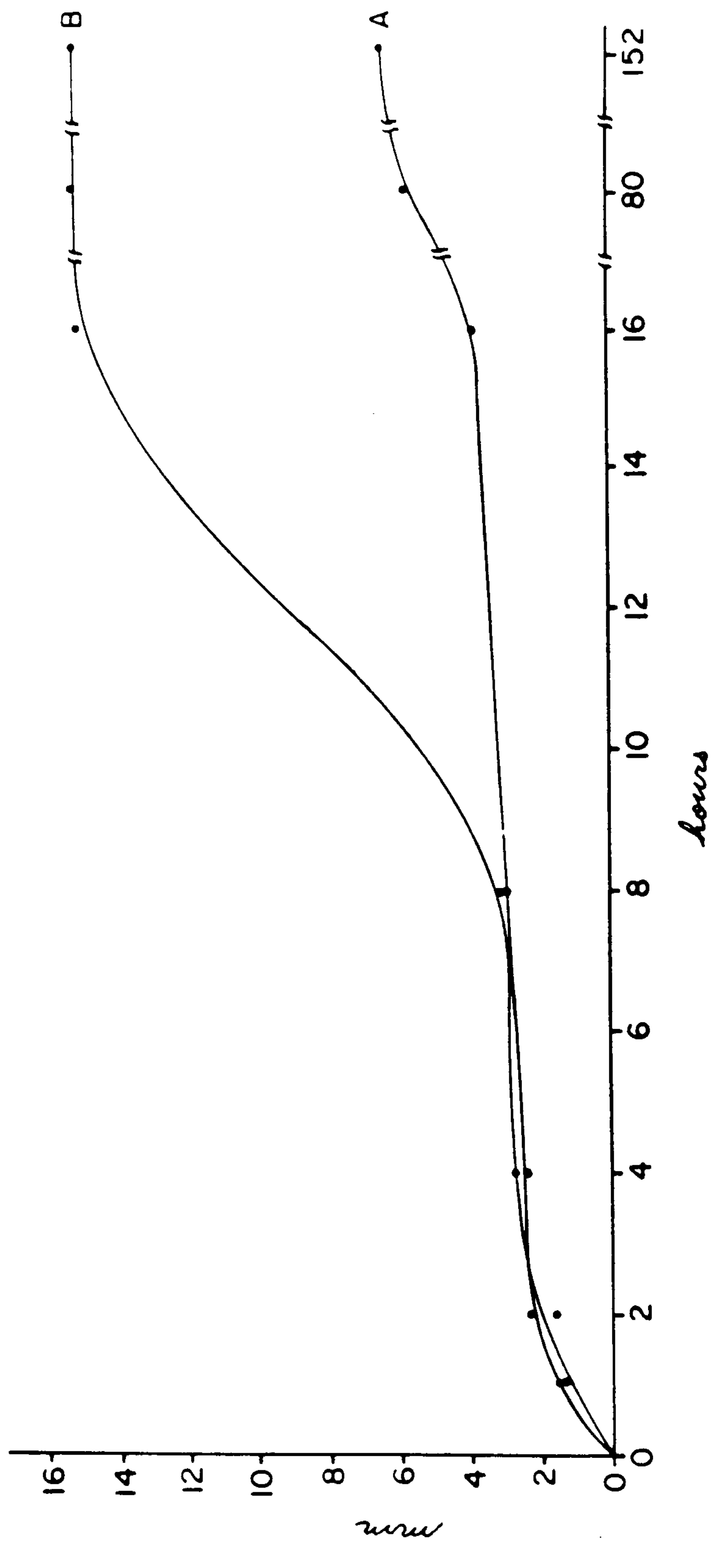


FIG. 2

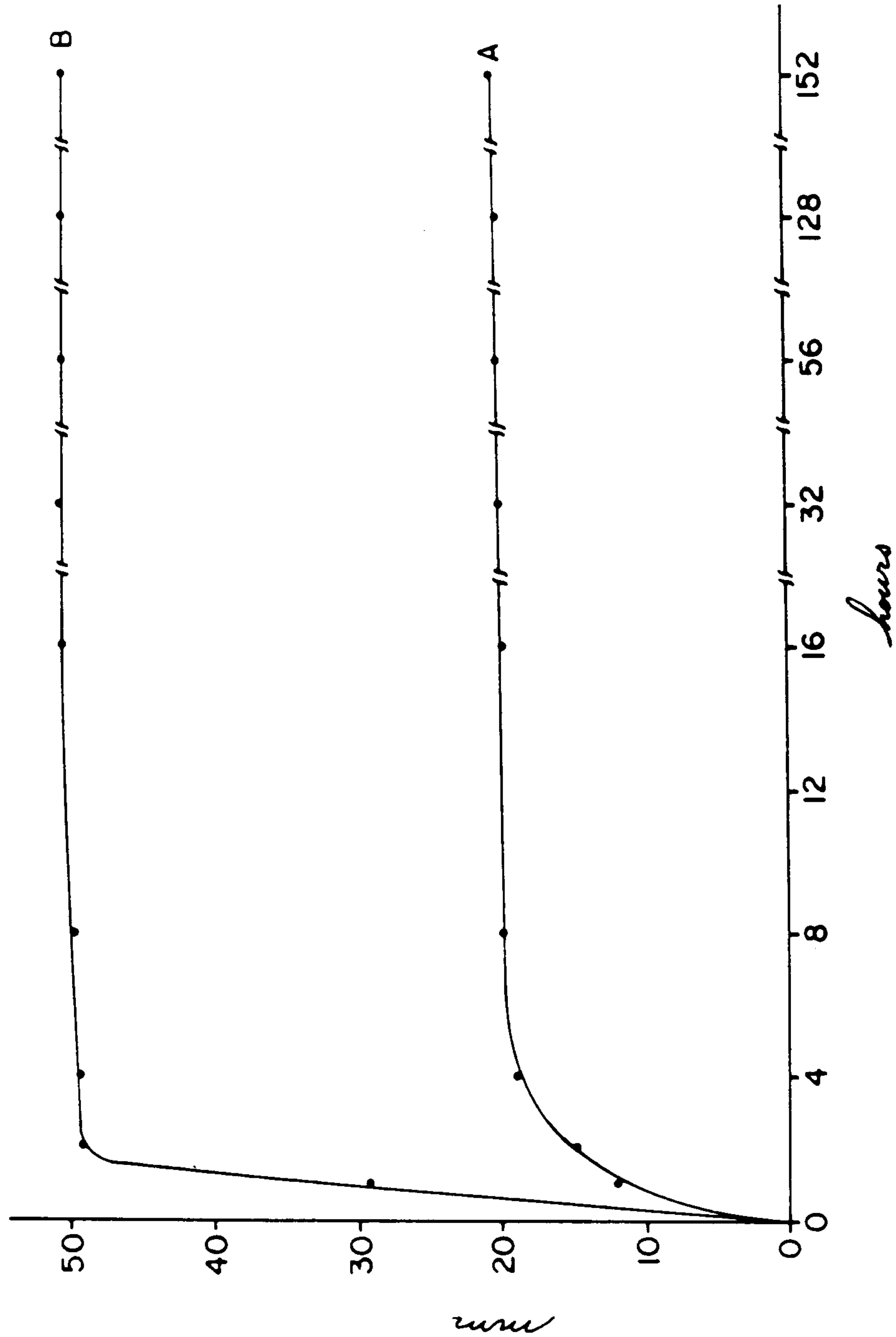


FIG. 3

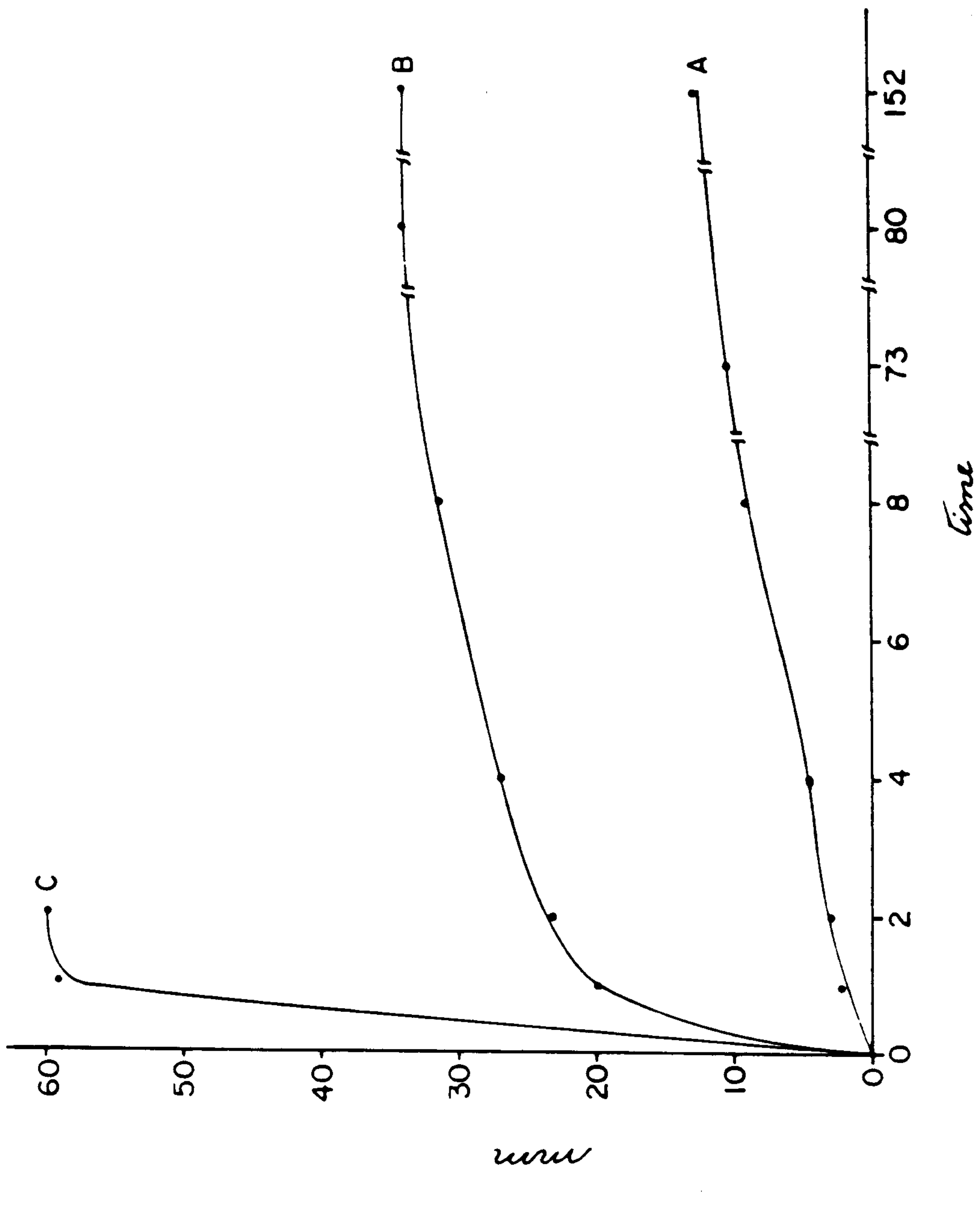


FIG. 4

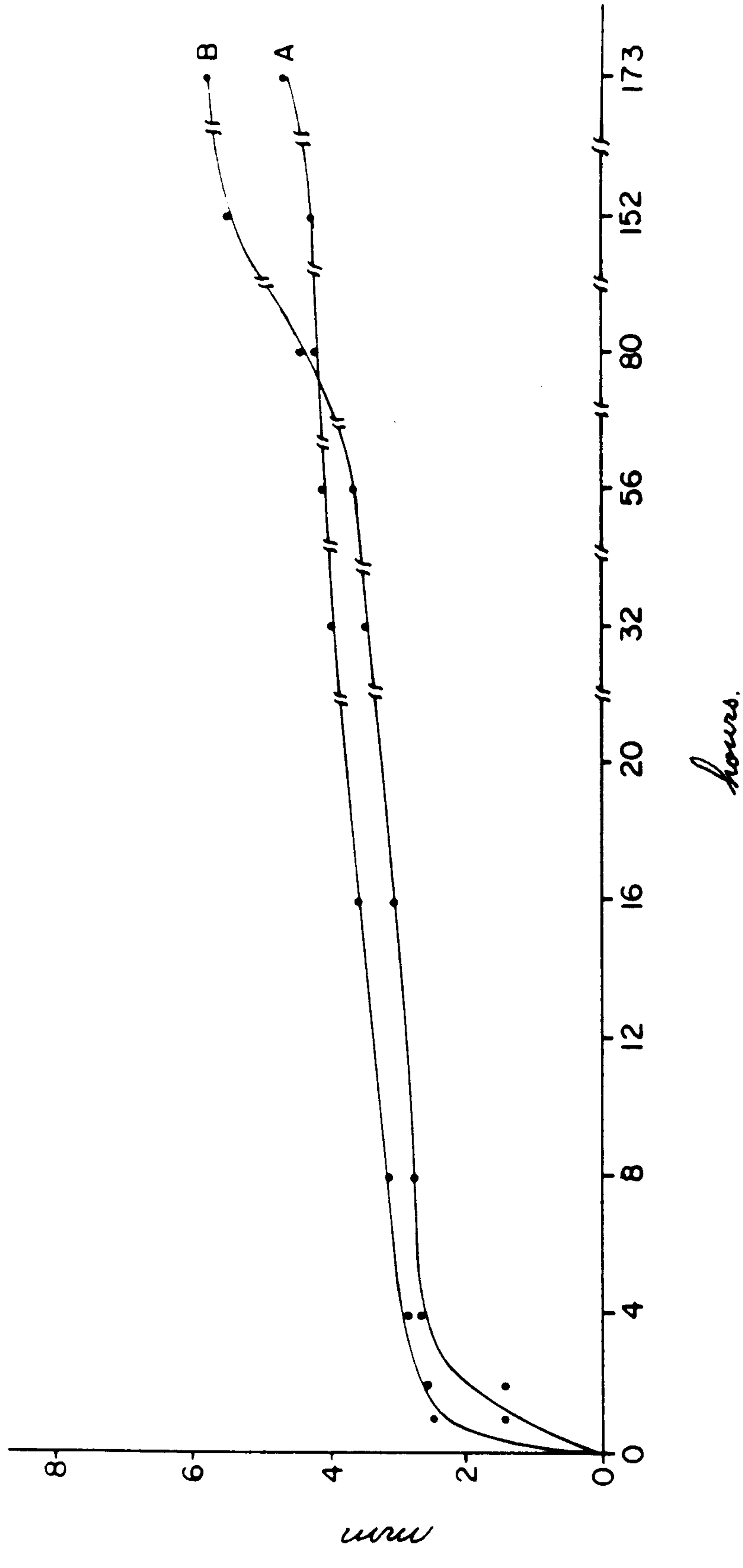


FIG. 5